# EUROPÄISCHE PATENTSCHRIFT

(11) **EP 4 417 363 B1**
(45) Veröffentlichungstag und Bekanntmachung des Hinweises auf die Patenterteilung: **04.06.2025**
(21) Anmeldenummer: 23212336.4
(22) Anmeldetag: 27.11.2023
(51) Int. Cl.: B24B 9/10, B24B 55/02

(54) **VORRICHTUNG ZUM BEARBEITEN EINER WERKSTÜCKPLATTE**
DEVICE FOR MACHINING A WORKPIECE PLATE
DISPOSITIF D'USINAGE D'UNE PLAQUE DE PIÈCE

(30) Priorität: 14.02.2023 AT 500942023
(43) Veröffentlichungstag der Anmeldung: 21.08.2024
(73) Patentinhaber: Schachner, Franz, 3354 Wolfsbach (AT)
(72) Erfinder: Schachner, Franz, 3354 Wolfsbach (AT)
(74) Vertreter: Hübscher & Partner Patentanwälte GmbH

(56) Entgegenhaltungen:
- EP-A1- 1 413 397
- EP-A2- 3 118 144
- WO-A1-95/00287

## Beschreibung

Die Erfindung bezieht sich auf eine Vorrichtung zum Bearbeiten einer Werkstückplatte mit einem rotierenden Werkzeug, mit einem das Werkzeug koaxial zu seiner Rotationsachse umschließenden, an eine Druckleitung für eine Kühlflüssigkeit angeschlossenen Kühlring zur Ausbildung eines gegen den Umfang des Werkzeugs gerichteten Kühlflüssigkeitskranzes und mit wenigstens einer durch den Kühlring gebildeten, in einem Umfangsabschnitt des Kühlflüssigkeitskranzes vorgesehenen Gleitfläche für das Werkstück.

Um eine Gleitführung für eine Werkstückplatte, insbesondere für eine Glasscheibe, im Bearbeitungsbereich eines Fräs- oder Schleifwerkzeugs so auszubilden, dass mit vergleichsweise einfachen konstruktiven Mitteln nicht nur eine schonende Führung der Werkstückplatte sichergestellt, sondern auch eine gute Kühlung des Werkzeugs als Voraussetzung für hohe Bearbeitungsleistungen gewährleistet werden kann, wurde bereits vorgeschlagen (EP 3 118 144 A2), den das Werkzeug koaxial umschließenden Kühlring, der eine an eine Druckleitung für eine Kühlflüssigkeit angeschlossene, radial einwärts gegen das Werkzeug ausgerichtete Ringdüse bildet, in einem Umfangsabschnitt als Gleitfläche für die Werkstückplatte zu nützen, sodass sich zwischen der Gleitfläche und der Werkstückplatte durch die Kühlflüssigkeit ein Hydraulikpolster aufbauen kann. Aus dem durch einen Ringkanal mit Kühlflüssigkeit gespeisten Hydraulikpolster strömt die Kühlflüssigkeit radial einwärts gegen das Werkzeug hin aus. Im übrigen Umfangsbereich wird die Kühlflüssigkeit durch die Ringdüse unmittelbar gegen den Umfang des Werkzeugs gesprüht, das somit durch einen Kühlflüssigkeitskranz gekühlt wird. Bei einer solchen Konstruktion besteht allerdings die Gefahr, dass bei einem für den Aufbau eines entsprechenden Hydraulikpolsters erforderlichen Beaufschlagungsdruck die Strömungsgeschwindigkeit des Sprührings aufgrund mitgeführter Feststoffpartikel zu einer Oberflächenverletzung der Werkstückplatte führt, insbesondere wenn die Werkstückplatte mit einer gegen eine mechanische Einwirkung empfindlichen Oberflächenschicht versehen ist, wie dies bei Glasscheiben häufig der Fall ist. Wird zur Vermeidung einer Oberflächengefährdung der Beaufschlagungsdruck entsprechend verringert, so muss mit einem unzureichenden Hydraulikpolster gerechnet werden.

Zum Kühlen von rotierenden Schleif- oder Fräswerkzeugen zur Bearbeitung von Glasscheibenrändern ist es bekannt (EP 1 413 397 A1), dem rotierenden Werkzeug einen zur Rotationsachse koaxialen Kühlring zuzuordnen, der an seiner dem Werkzeug zugewandten Innenseite in Umfangsrichtung verteilt Düsenlöcher aufweist, die mit der Rotationsachse des Werkzeugs einen spitzen Winkel einschließen und mit einem Ringkanal des Kühlrings verbunden sind. Bei einer Beaufschlagung des Ringkanals mit Kühlflüssigkeit bildet sich ein gegen das rotierende Werkzeug gerichteter Kühlflüssigkeitskranz aus, mit dessen Hilfe die Wärme vom rotierenden Werkzeug abgeführt werden kann. Da lediglich die Ausbildung eines entsprechenden Kühlflüssigkeitskranzes zu berücksichtigen ist, kann die Strömungsgeschwindigkeit innerhalb des Kühlflüssigkeitskranzes auf ein für die Gefährdung der Werkstückoberfläche unbedenkliches Maß beschränkt werden.

Der Erfindung liegt somit die Aufgabe zugrunde, eine Vorrichtung zum Bearbeiten einer Werkstückplatte mit einem rotierenden Werkzeug so auszugestalten, dass mithilfe der Kühlflüssigkeit sowohl eine schonende Gleitführung für die Werkstückplatte sichergestellt als auch eine wirksame Kühlung des rotierenden Werkzeugs ohne Gefährdung der Werkstückoberfläche erreicht werden kann.

Ausgehend von einer Vorrichtung der eingangs geschilderten Art löst die Erfindung die gestellte Aufgabe dadurch, dass der Kühlring über seinen Umfang verteilte, gegen den Umfang des Werkzeugs ausgerichtete, im Gleitflächenbereich in der Gleitfläche mündende Sprühkanäle aufweist, die je durch eine Drossel mit einem an die Druckleitung für die Kühlflüssigkeit angeschlossenen Ringkanal verbunden sind.

Durch das Auflösen der bekannten Ringdüse in einen Kranz von einzelnen, gegen den Werkzeugumfang gerichteten Sprühkanälen, die je durch eine Drossel mit dem Ringkanal verbunden sind, kann für die einzelnen Sprühkanäle ein von den Strömungsbedingungen im Bereich der übrigen Sprühkanäle weitgehend unabhängiger Beaufschlagungsdruck sichergestellt werden, weil für die Strömungsaufteilung auf die einzelnen Strömungskanäle im Wesentlichen die Drosseln maßgebend sind. Dies hat zur Folge, dass die Strömungsgeschwindigkeit in den Sprühkanälen auch durch eine entsprechende Wahl des Strömungsquerschnitts verringert werden kann, ohne die Stabilität der Hydraulikpolster im Bereich der Gleitfläche für die Werkstückplatte zu gefährden.

Besonders günstige Anbindungsverhältnisse für die einzelnen Sprühkanäle an den gemeinsamen Ringkanal ergeben sich, wenn zwischen den Sprühkanälen und dem Ringkanal die Drosseln aufnehmende Kammern vorgesehen sind, von denen die Sprühkanäle ausgehen, weil unter diesen Konstruktionsvorgaben die Strömungsgeschwindigkeit in den Sprühkanälen maßgeblich vom Flüssigkeitsdruck in den Kammern abhängt. Besonders einfache Konstruktionsbedingungen können in diesem Zusammenhang dadurch erhalten werden, dass die Achsen der als Bohrungen ausgebildeten Kammern parallel zur Rotationsachse des Werkzeugs verlaufen.

In der Zeichnung ist der Erfindungsgegenstand beispielsweise dargestellt. Es zeigen
- Fig. 1: eine erfindungsgemäße Vorrichtung zum Bearbeiten einer Werkstückplatte in einer Stirnansicht,
- Fig. 2: diese Vorrichtung in einem Schnitt nach der Linie II-II der Fig. 1 in einem größeren Maßstab und

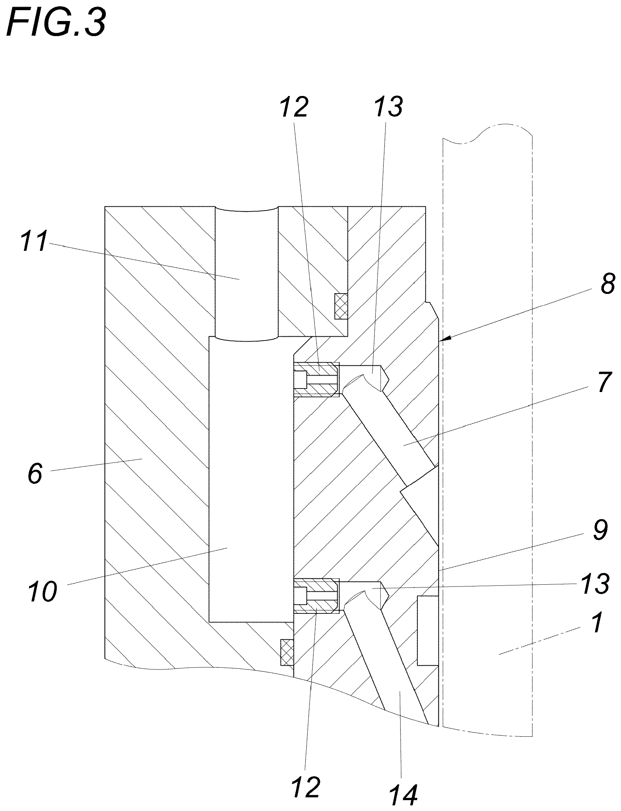

- Fig. 3: die Vorrichtung ausschnittsweise im Bereich eines Sprühkanals in einem Axialschnitt in einem größeren Maßstab.

Eine erfindungsgemäße Vorrichtung zum Bearbeiten einer Werkstückplatte 1, im Ausführungsbeispiel einer Glasscheibe, weist ein auf einer Antriebswelle 2 gelagertes Werkzeug 3 zum Bearbeiten eines Plattenrands 4 beispielsweise durch ein Schleifen oder Fräsen auf. Ein das Werkzeug 3 mit seinem Antrieb aufnehmendes Gestell 5 trägt einen das Werkzeug 3 umschließenden, zur Antriebswelle 2 und damit zur Rotationsachse koaxialen Kühlring 6, der einen Kranz von Sprühkanälen 7 aufweist, die gegen den Umfang des Werkzeugs 3 radial einwärts geneigt sind und in einer ebenen Ringfläche 8 auf der Stirnseite des Kühlrings 6 münden. Diese Ringfläche 8 bildet auf der Eingriffsseite des Werkzeugs 3 ein Führungssegment mit einer Gleitfläche 9 für die Werkstückplatte 1.

Zur Beaufschlagung der Sprühkanäle 7 mit einer Kühlflüssigkeit weist der Kühlring 6 einen Ringkanal 10 auf, der durch einen Anschluss 11 mit einer Druckleitung für die Kühlflüssigkeit verbunden ist. Die Sprühkanäle 7 sind an den Ringkanal 10 je für sich durch Drosseln 12 angeschlossen, die in Kammern 13 eingesetzt sind, von denen die Strömungskanäle 7 ausgehen. Werden die Kammern 13 durch zur Antriebswelle 2 des Werkzeugs 3 parallele Sackbohrungen gebildet, die die vorzugsweise ebenfalls als Sackbohrungen ausgebildeten Sprühkanäle 7 schneiden, ergeben sich einfache Konstruktionsverhältnisse, mit deren Hilfe die geforderten Strömungsbedingungen vorteilhaft berücksichtigt werden können.

Mit einer Kühlflüssigkeitsbeaufschlagung des Ringkanals 10 strömt die Kühlflüssigkeit aus dem Ringkanal 10 durch die Drosseln 12 in die Kammern 13 und von dort durch die Sprühkanäle 7, um einen das Werkzeug 3 umschließenden, gegen seinen Umfang gerichteten Kühlflüssigkeitskranz auszubilden. Während die Kühlflüssigkeit außerhalb der Gleitfläche 9 des Führungssegments unter Ausbildung von sich zu einem Sprühkranz vereinigenden Sprühkegeln ungehindert aus den einzelnen Sprühkanälen 7 ausströmen kann, bedingt die Werkstückplatte 1, dass sich im Bereich des Führungssegments zwischen der Gleitfläche 9 und der Werkstückplatte 1 ein Hydraulikpolster aufbaut, der für eine schonende Gleitführung der Werkstückplatte 1 entlang des Führungssegments des Kühlrings 6 sorgt. Die radial einwärts aus dem Spalt zwischen Gleitfläche 9 und Werkstückplatte 1 austretende Kühlflüssigkeit gelangt wiederum zum Werkzeug 3, das somit auch unmittelbar im Eingriffsbereich gekühlt wird.

Aufgrund der Drosselwirkung der Drosseln 12 kann in den Kammern 13 ein weitgehend gleichmäßiger Flüssigkeitsdruck gewährleistet werden, der für eine Verringerung der Strömungsgeschwindigkeit in den einzelnen Sprühkanälen 7 und damit für eine schonende Behandlung der Werkstückoberfläche durch den Flüssigkeitssprühkranz sorgt, zumal der Strömungsquerschnitt der Sprühkanäle 7 entsprechend groß gewählt werden kann, und zwar ohne Gefahr zu laufen, dass der Hydraulikpolster zwischen der Gleitfläche 9 des Führungssegments des Kühlrings 6 und der Werkstückplatte 1 abgebaut wird.

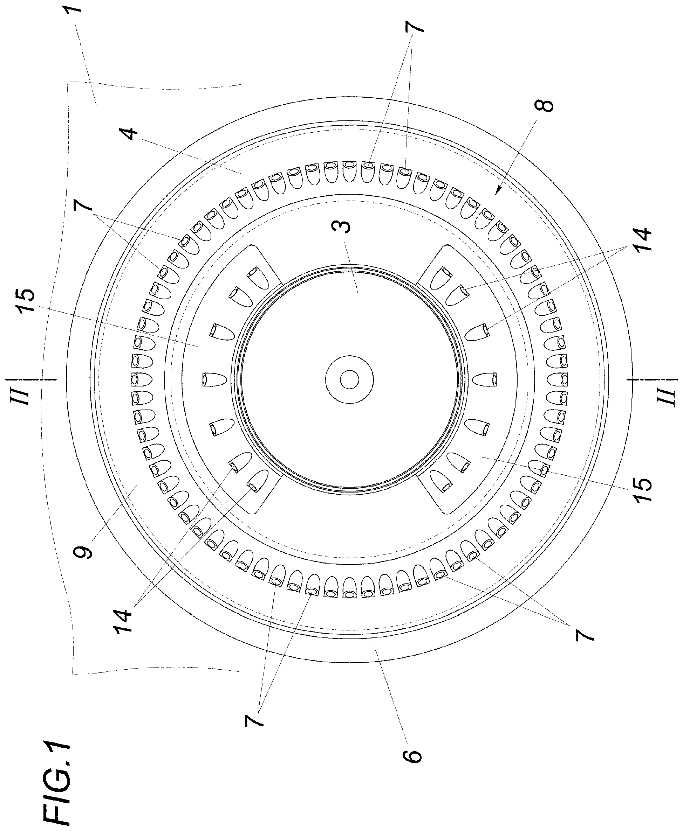

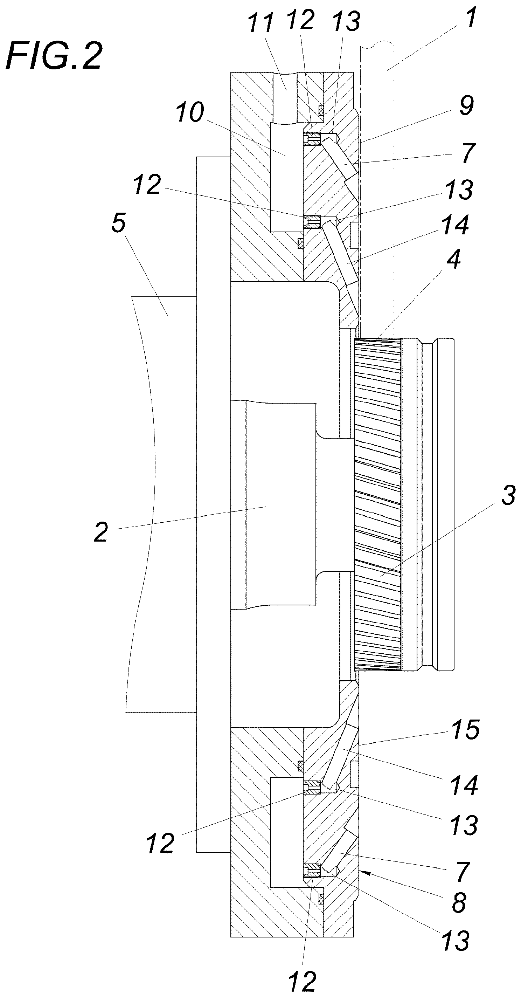

Eine erfindungsgemäße Vorrichtung ist keinesfalls auf die Ausbildung eines einzigen Kranzes von Sprühkanälen 7 beschränkt. So können im Bedarfsfall weitere Sprühkanalkränze vorgesehen oder lediglich zusätzliche Sprühkanäle 14 in Bereichen konzentrischer Ringsektoren 15 Vorgesehen werden, die wiederum Gleitflächen für die Werkstückplatte 1 zum Aufbau entsprechender Hydraulikpolster bilden können, wie dies in den Fig. 1 und 2 dargestellt ist. Selbstverständlich müssen auch diese zusätzlichen Sprühkanäle 14 mithilfe von Drosseln 12 an den Ringkanal 10 oder aber auch an einen gesondert mit Kühlflüssigkeit beaufschlagbaren Verteilerkanal angeschlossen werden. Dabei empfiehlt sich eine für alle Sprühkanäle 7, 14 übereinstimmende Anschlusskonstruktion mithilfe einer Kammer 13.

## Patentansprüche

1. Vorrichtung zum Bearbeiten einer Werkstückplatte (1) mit einem rotierenden Werkzeug (3), mit einem das Werkzeug (3) koaxial zu seiner Rotationsachse umschließenden, an eine Druckleitung für eine Kühlflüssigkeit angeschlossenen Kühlring (6) zur Ausbildung eines gegen den Umfang des Werkzeugs (3) gerichteten Kühlflüssigkeitskranzes und mit wenigstens einer durch den Kühlring (6) gebildeten, in einem Umfangsabschnitt des Kühlflüssigkeitskranzes vorgesehenen Gleitfläche (9) für die Werkstückplatte (1), **dadurch gekennzeichnet, dass** der Kühlring (6) über seinen Umfang verteilte, gegen den Umfang des Werkzeugs (3) ausgerichtete, im Gleitflächenbereich in der Gleitfläche (9) mündende Sprühkanäle (7, 14) aufweist, die je durch eine Drossel (12) mit einem an die Druckleitung für die Kühlflüssigkeit angeschlossenen Ringkanal (10) verbunden sind.

2. Vorrichtung nach Anspruch 1, **dadurch gekennzeichnet, dass** zwischen den Sprühkanälen (7, 14) und dem Ringkanal (10) die Drosseln (12) aufnehmende Kammern (13) vorgesehen sind, von denen die Sprühkanäle (7) ausgehen.

3. Vorrichtung nach Anspruch 2, **dadurch gekennzeichnet, dass** die Achsen der als Bohrungen ausgebildeten Kammern (13) parallel zur Rotationsachse des Werkzeugs (3) verlaufen.

## Claims

1. Device for machining a workpiece plate (1) with a rotating tool (3), with a cooling ring (6) surrounding the tool (3) coaxially to its axis of rotation and the cooling ring (6) being connected to a pressure line for a cooling liquid to form a cooling liquid crown directed towards the circumference of the tool (3) and with at least one sliding surface (9) for the workpiece plate (1) formed by the cooling ring (6), provided in a circumferential section of the cooling liquid crown for the workpiece plate (1), **characterized in that** the cooling ring (6) has spray channels (7, 14) which are distributed over its circumference, are aligned towards the circumference of the tool (3) and open out in the sliding surface region in the sliding surface (9) and are each connected by a throttle (12) to an annular channel (10) which is connected to the pressure line for the cooling liquid.

2. Device according to claim 1, **characterized in that** chambers (13) receiving the throttles (12) are provided between the spray channels (7, 14) and the annular channel (10), from which the spray channels (7) extend.

3. Device according to claim 2, **characterized in that** the axes of the chambers (13) formed as bores run parallel to the axis of rotation of the tool (3).

## Revendications

1. Dispositif destiné à usiner une plaque de pièce (1) avec un outil rotatif (3), avec une bague de refroidissement (6) entourant l'outil (3) de manière coaxiale à son axe de rotation et raccordée à une conduite de pression pour un liquide de refroidissement afin de former une couronne de liquide de refroidissement dirigée contre la périphérie de l'outil (3) et avec au moins une surface de glissement (9) pour la plaque de pièce (1) qui est formée par la bague de refroidissement (6) et prévue dans une section périphérique de la couronne de liquide de refroidissement, **caractérisé en ce que** la bague de refroidissement (6) présente des canaux de pulvérisation (7, 14), répartis sur sa périphérie et orientés contre la périphérie de l'outil (3) en débouchant dans la zone de surface de glissement de la surface de glissement (9), lesquels canaux sont reliés par le biais d'un étranglement (12) à un canal annulaire (10) raccordé à la conduite de pression pour le liquide de refroidissement.

2. Dispositif selon la revendication 1, **caractérisé en ce que**, entre les canaux de pulvérisation (7, 14) et le canal annulaire (10), des chambres (13) recevant les étranglements (12) sont prévues, desquelles partent les canaux de pulvérisation (7).

3. Dispositif selon la revendication 2, **caractérisé en ce que** les axes des chambres (13) réalisées sous la forme d'alésages s'étendent parallèlement à l'axe de rotation de l'outil (3).
